# EUROPEAN PATENT APPLICATION

(11) **EP 4 245 597 A1**
(43) Date of publication of application: **20.09.2023**
(21) Application number: 23152592.4
(22) Date of filing: 20.01.2023
(51) Int. Cl.: B60L 53/30, B60L 53/80

(54) **METHOD AND COMPUTER SYSTEM FOR MANAGING VEHICLE TO BE BATTERY SWAPPED AND MEDIUM**

(30) Priority: 18.03.2022 CN 202210266589
(71) Applicant: Nio Technology (Anhui) Co., Ltd, Hefei City, Anhui 230601 (CN)
(72) Inventor: WANG, Yifei, Hefei City, Anhui 230601 (CN); ZOU, Jiyong, Hefei City, Anhui 230601 (CN)
(74) Representative: Vossius & Partner Patentanwälte Rechtsanwälte mbB

(57) **Abstract**

The disclosure relates to a method for managing a vehicle to be battery swapped, a computer system for implementing the method, and a computer storage medium. According to an aspect of the disclosure, a method for managing a vehicle to be battery swapped includes the following steps: after a battery swapping operation for a current service vehicle on a battery swap platform is finished for a first time period, detecting whether the current service vehicle is on the battery swap platform; enabling a first management operation in response to detecting that the current service vehicle is on the battery swap platform; after the first management operation is finished for a second time period, detecting whether the current service vehicle is on the battery swap platform; and in response to detecting that the current service vehicle is on the battery swap platform, enabling a second management operation corresponding to the first management operation.

## Description

### Technical Field

The disclosure relates to the field of electric vehicles, and more specifically, to a method for managing a vehicle to be battery swapped, a computer system for implementing the method, and a computer storage medium.

### Background Art

At present, there are two main modes of energy supply for a battery electric vehicle: vehicle charging and battery replacement. In the vehicle charging mode, AC slow charging causes a long charging time and is limited by a parking place, while DC fast charging, though it shortens the charging time through a high power, has a great impact on a power grid and reduces the service life of the battery. In the battery replacement mode, the battery swap station can implement orderly charging by interacting with the power grid, and improve the comprehensive utilization efficiency of a power device, thereby quickly supplying energy to the electric vehicle, reducing waiting time of users, and not reducing the service life of the battery. Therefore, the battery replacement mode has high popularization value and economic significance in the urban public transportation field in China.

With the popularization of battery swap stations, more and more vehicle users choose the battery replacement mode to supply energy to electric vehicles. However, due to a limited quantity of vehicles to be battery swapped that can be served by the battery swap station in a unit time, the vehicles to be battery swapped need to wait in line for a long time to have their batteries swapped during a peak usage period of the battery swap station, thus affecting the user experience in the battery swapping process. In this case, in addition to continuously improving the mechanical efficiency of the battery swapping process, it is also a very necessary means to effectively manage the vehicles to be battery swapped, arrange the battery swapping operation, and ensure the orderly and reliable operation of the battery swap station.

To effectively manage the vehicles to be battery swapped, arrange the battery swapping operation, and ensure the orderly and reliable operation of the battery swap station, currently, it is necessary to manually determine whether there is a vehicle in the battery swap station, and it is also necessary to manually determine whether the vehicle in the battery swap station has left after the battery swapping for the vehicle is completed, thus causing higher labor cost and not meeting the development needs of unattended stations to realize a full self-service battery swapping scenario.

### Summary of the Disclosure

In order to solve or at least alleviate one or more of the above problems, the following technical solutions are provided.

According to a first aspect of the disclosure, a method for managing a vehicle to be battery swapped is provided, including the following steps: after a battery swapping operation for a current service vehicle on a battery swap platform is finished for a first time period, detecting whether the current service vehicle is on the battery swap platform; enabling a first management operation in response to detecting that the current service vehicle is on the battery swap platform; after the first management operation is finished for a second time period, detecting whether the current service vehicle is on the battery swap platform; and in response to detecting that the current service vehicle is on the battery swap platform, enabling a second management operation corresponding to the first management operation,

According to the method for managing a vehicle to be battery swapped in an embodiment of the disclosure, the detecting whether the current service vehicle is on the battery swap platform includes: using an image collection device to collect an image of the battery swap platform; using an image detection algorithm to process the collected image of the battery swap platform; and determining, based on a processing result of the image detection algorithm, whether the current service vehicle is on the battery swap platform.

According to the method for managing a vehicle to be battery swapped in an embodiment or any one of the above embodiments of the disclosure, the first management operation includes: sending a first message to the current service vehicle, where the first message is used to instruct the current service vehicle to leave the battery swap platform; and sending a second message to a cloud, where the second message is used to create a vehicle identifier associated with the current service vehicle and a count value corresponding to the vehicle identifier.

According to the method for managing a vehicle to be battery swapped in an embodiment or any one of the above embodiments of the disclosure, the second management operation corresponding to the first management operation includes: detecting, by taking the second time period as a detection period, whether the current service vehicle is on the battery swap platform; sending a third message to the cloud in response to detecting that the current service vehicle is on the battery swap platform, where the third message is used to increment the count value corresponding to the vehicle identifier; and triggering a remote O&M operation in response to receiving, from the cloud, a signal indicating that the incremented count value corresponding to the vehicle identifier reaches a preset threshold.

According to the method for managing a vehicle to be battery swapped in an embodiment or any one of the above embodiments of the disclosure, the method further includes: detecting, by taking the second time period as a detection period, whether the current service vehicle is on the battery swap platform; and sending a fourth message to the cloud in response to detecting that the current service vehicle leaves the battery swap platform, where the fourth message is used to notify the cloud that the current service vehicle corresponding to the vehicle identifier leaves the battery swap platform and that the incremented count value corresponding to the vehicle identifier is cleared.

According to the method for managing a vehicle to be battery swapped in an embodiment or any one of the above embodiments of the disclosure, the method further includes: after the battery swapping operation for the current service vehicle on the battery swap platform is finished for the first time period, detecting whether the current service vehicle is on the battery swap platform; and in response to detecting that the current service vehicle leaves the battery swap platform, instructing a vehicle to be serviced to enter the battery swap platform.

According to the method for managing a vehicle to be battery swapped in an embodiment or any one of the above embodiments of the disclosure, the method further includes: after the first management operation is finished for a second time period, detecting whether the current service vehicle is on the battery swap platform; and in response to detecting that the current service vehicle leaves the battery swap platform, instructing a vehicle to be serviced to enter the battery swap platform.

According to a second aspect of the disclosure, a computer system for managing a vehicle to be battery swapped is provided, including: a memory; a processor; and a computer program stored on the memory and executable on the processor, where the execution of the computer program causes the following steps to be performed: after a battery swapping operation for a current service vehicle on a battery swap platform is finished for a first time period, detecting whether the current service vehicle is on the battery swap platform; enabling a first management operation in response to detecting that the current service vehicle is on the battery swap platform; after the first management operation is finished for a second time period, detecting whether the current service vehicle is on the battery swap platform; and in response to detecting that the current service vehicle is on the battery swap platform, enabling a second management operation corresponding to the first management operation,

According to the computer system for managing a vehicle to be battery swapped in an embodiment of the disclosure, the detecting whether the current service vehicle is on the battery swap platform includes: using an image collection device to collect an image of the battery swap platform; using an image detection algorithm to process the collected image of the battery swap platform; and determining, based on a processing result of the image detection algorithm, whether the current service vehicle is on the battery swap platform.

According to the computer system for managing a vehicle to be battery swapped in an embodiment or any one of the above embodiments of the disclosure, the first management operation includes: sending a first message to the current service vehicle, where the first message is used to instruct the current service vehicle to leave the battery swap platform; and sending a second message to a cloud, where the second message is used to create a vehicle identifier associated with the current service vehicle and a count value corresponding to the vehicle identifier.

According to the computer system for managing a vehicle to be battery swapped in an embodiment or any one of the above embodiments of the disclosure, the second management operation corresponding to the first management operation includes: detecting, by taking the second time period as a detection period, whether the current service vehicle is on the battery swap platform; sending a third message to the cloud in response to detecting that the current service vehicle is on the battery swap platform, where the third message is used to increment the count value corresponding to the vehicle identifier; and triggering a remote O&M operation in response to receiving, from the cloud, a signal indicating that the incremented count value corresponding to the vehicle identifier reaches a preset threshold.

According to the computer system for managing a vehicle to be battery swapped in an embodiment or any one of the above embodiments of the disclosure, the execution of the computer program further causes the following steps to be performed: detecting, by taking the second time period as a detection period, whether the current service vehicle is on the battery swap platform; and sending a fourth message to the cloud in response to detecting that the current service vehicle leaves the battery swap platform, where the fourth message is used to notify the cloud that the current service vehicle corresponding to the vehicle identifier leaves the battery swap platform and that the incremented count value corresponding to the vehicle identifier is cleared.

According to the computer system for managing a vehicle to be battery swapped in an embodiment or any one of the above embodiments of the disclosure, the execution of the computer program further causes the following steps to be performed: after the battery swapping operation for the current service vehicle on the battery swap platform is finished for the first time period, detecting whether the current service vehicle is on the battery swap platform; and in response to detecting that the current service vehicle leaves the battery swap platform, instructing a vehicle to be serviced to enter the battery swap platform.

According to the computer system for managing a vehicle to be battery swapped in an embodiment or any one of the above embodiments of the disclosure, the execution of the computer program further causes the following steps to be performed: after the first management operation is finished for a second time period, detecting whether the current service vehicle is on the battery swap platform; and in response to detecting that the current service vehicle leaves the battery swap platform, instructing a vehicle to be serviced to enter the battery swap platform.

According to a third aspect of the disclosure, a computer storage medium is provided, including instructions, where when the instructions are run, the steps of the method for managing a vehicle to be battery swapped according to the first aspect of the disclosure are performed.

According to a fourth aspect of the disclosure, a battery swap station is provided, including the computer system for managing a vehicle to be battery swapped according to the second aspect of the disclosure.

According to one or more embodiments of the disclosure, the solution for managing a vehicle to be battery swapped can implement a full self-service battery swap station scenario, implement closed-loop management of vehicle departure in the self-service battery swapping through communication interconnection between a battery swap station, a vehicle to be battery swapped, and a cloud, improve the operation efficiency of the battery swap station while protecting the safety of the vehicle to be battery swapped and drivers and passengers, reduce the waiting time of vehicles to be battery swapped, improve the user experience in the vehicle battery swapping process, and reduce the labor cost of the battery swap station.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a flowchart of a method for managing a vehicle to be battery swapped according to one or more embodiments of the disclosure;
FIG. 2 is a schematic block diagram of a computer system for managing a vehicle to be battery swapped according to one or more embodiments of the disclosure; and
FIG. 3 is a schematic flowchart of a method for managing a vehicle to be battery swapped according to one or more embodiments of the disclosure.

### Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies may be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

Various exemplary embodiments according to the disclosure will be described below in detail with reference to the accompanying drawings.

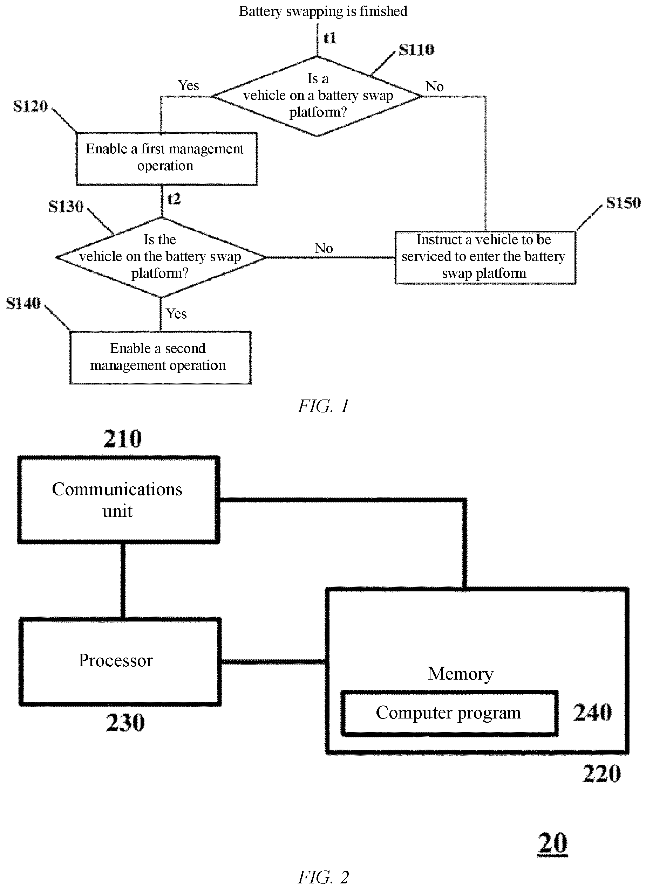

FIG. 1 is a flowchart of a method for managing a vehicle to be battery swapped according to one or more embodiments of the disclosure.

As shown in FIG. 1, after a battery swapping operation for a current service vehicle on a battery swap platform is finished for a first time period t1, step S 110 is performed to detect whether the current service vehicle is on the battery swap platform.

Optionally, in step S110, one or more image collection devices (for example, cameras) arranged on the battery swap station side may be used to collect an image of the battery swap platform, an image detection algorithm is used to process the collected image of the battery swap platform, and whether the current service vehicle is on the battery swap platform is determined based on a processing result of the image detection algorithm. In an embodiment, an edge AI image inference device arranged on the battery swap station side may be used to process the collected image of the battery swap platform, so as to determine whether there is a vehicle on the battery swap platform. If it is determined that there is a vehicle in the collected image of the battery swap platform, coding information is generated to indicate that there is a vehicle on the battery swap platform; or if it is determined that there is no vehicle in the collected image of the battery swap platform, other different coding information is generated to indicate that there is no vehicle on the battery swap platform.

When it is detected that the current service vehicle is on the battery swap platform, step S 120 is performed to enable a first management operation. When it is detected that the current service vehicle leaves the battery swap platform, step S 150 is performed to instruct a next vehicle to be serviced to enter the battery swap platform.

Optionally, in step S 120, a first message may be sent to the current service vehicle, where the first message is used to instruct the current service vehicle to leave the battery swap platform. Exemplarily, a communication link may be established with the current service vehicle in manners such as WiFi, Bluetooth, LAN, or 3G/4G/5G, so as to instruct, by using a central control screen of the vehicle, a phone, or an SMS message, the current service vehicle to leave the battery swap platform in time. Exemplarily, the first message may alternatively instruct the current service vehicle to leave the battery swap platform by using a display screen arranged in the battery swap station. The first message is sent to the current service vehicle to instruct the current service vehicle to leave the battery swap platform, so that the following case can be avoided: the current service vehicle stays in the battery swap station for a long time after the battery swapping operation is completed, occupying the battery swap platform and affecting the battery swapping process of other vehicles to be swapped.

Optionally, in step S 120, a second message may be also sent to a cloud, where the second message is used to create a vehicle identifier associated with the current service vehicle and a count value corresponding to the vehicle identifier.

After the execution of step S 120 is finished for a second time period t2, step S 130 is performed to re-detect whether the current service vehicle is on the battery swap platform.

Optionally, in step S 130, one or more image collection devices arranged on the battery swap station side may be used to collect an image of the battery swap platform, an image detection algorithm may be used to process the collected image of the battery swap platform, and whether the current service vehicle is on the battery swap platform is determined based on a processing result of the image detection algorithm.

When it is detected that the current service vehicle is on the battery swap platform, step S 140 is performed to enable a second management operation. When it is detected that the current service vehicle leaves the battery swap platform, step S 150 is performed to instruct a next vehicle to be serviced to enter the battery swap platform.

Optionally, in step S 140, whether the current service vehicle is on the battery swap platform may be detected by taking the second time period t2 as a detection period, and a third message is sent to the cloud in response to detecting that the current service vehicle is on the battery swap platform, where the third message is used to increment the count value corresponding to the vehicle identifier, and a remote O&M operation is triggered in response to receiving, from the cloud, a signal indicating that the incremented count value corresponding to the vehicle identifier reaches a preset threshold. In an embodiment, the remote O&M operation may include notifying the remote service personnel to instruct the current service vehicle to leave the battery swap platform, and notifying the service personnel of the battery swap station to guide the current service vehicle to leave the battery swap platform when necessary. The second message is sent to the cloud to create the vehicle identifier associated with the current service vehicle and the count value corresponding to the vehicle identifier, and the third message is sent to the cloud to increment the count value corresponding to the vehicle identifier, so that the monitoring of the current service vehicle may be implemented in the cloud, when the current service vehicle stays on the battery swap station for a long time after the battery swapping operation is completed and occupies the battery swap platform, the current service vehicle is instructed to leave the battery swap platform in time, for example, through a telephone number stored on a vehicle registration platform in the cloud.

Optionally, in step S 140, whether the current service vehicle is on the battery swap platform may be detected by taking the second time period t2 as a detection period, and a fourth message is sent to the cloud in response to detecting that the current service vehicle leaves the battery swap platform, where the fourth message is used to notify the cloud that the current service vehicle corresponding to the vehicle identifier leaves the battery swap platform and that the incremented count value corresponding to the vehicle identifier is cleared.

As an example, the first time period t1 may be 15 seconds, 20 seconds, 25 seconds, or the like, and the second time period t2 may be 30 seconds, 35 seconds, 40 seconds, or the like. In an embodiment, the first time period t1 and the second time period t2 may be dynamically adjusted based on a quantity of vehicles to be serviced. For example, a correspondence between a quantity of vehicles to be serviced and a duration of the first time period t1 and the second time period t2 is established, so that the first time period t1 and the second time period t2 with a shorter duration may be selected when the quantity of vehicles to be serviced is larger, and the first time period t1 and the second time period t2 with a longer duration may be selected when the quantity of vehicles to be serviced is smaller, so as to reduce the waiting time of users of vehicles to be serviced and avoid frequently disturbing users of current vehicles to be battery swapped, thereby improving the experience of users of vehicles to be battery swapped.

According to an aspect of the disclosure, the method for managing a vehicle to be battery swapped can implement a full self-service battery swap station scenario, implement closed-loop management of vehicle departure in the self-service battery swapping through communication interconnection between a battery swap station, a vehicle to be battery swapped, and a cloud, improve the operation efficiency of the battery swap station while protecting the safety of the vehicle to be battery swapped and drivers and passengers, reduce the waiting time of vehicles to be battery swapped, improve the user experience in the vehicle battery swapping process, and reduce the labor cost of the battery swap station.

FIG. 2 is a schematic block diagram of a computer system for managing a vehicle to be battery swapped according to one or more embodiments of the disclosure.

As shown in FIG. 2, the computer system 20 for managing a vehicle to be battery swapped includes a communications unit 210, a memory 220 (for example, a non-volatile memory such as a flash memory, a ROM, a hard disk drive, a magnetic disk, an optical disc, or the like), a processor 230, and a computer program 240 stored on the memory 220 and executable on the processor 230.

The communications unit 210, as a communications interface, is configured to establish a communication connection between the computer system 20 and an external device or network (for example, a cloud, a vehicle side, or the like). In an embodiment, the communications unit 210 may be configured to send a first message to a current service vehicle, where the first message is used to instruct the current service vehicle to leave a battery swap platform. In an embodiment, the communications unit 210 may be configured to send a second message to a cloud, where the second message is used to create a vehicle identifier associated with the current service vehicle and a count value corresponding to the vehicle identifier. In an embodiment, the communications unit 210 may be configured to send a third message to the cloud, where the third message is used to increment the count value corresponding to the vehicle identifier, and receive, from the cloud, a signal indicating that the incremented count value corresponding to the vehicle identifier reaches a preset threshold. In an embodiment, the communications unit 210 may be configured to send a fourth message to the cloud, where the fourth message is used to notify the cloud that the current service vehicle corresponding to the vehicle identifier leaves the battery swap platform and that the incremented count value corresponding to the vehicle identifier is cleared.

The memory 220 stores the computer program 240 executable by the processor 230. The processor 230 is configured to execute the computer program 240 to implement the method for managing a vehicle to be battery swapped according to one or more embodiments of the disclosure.

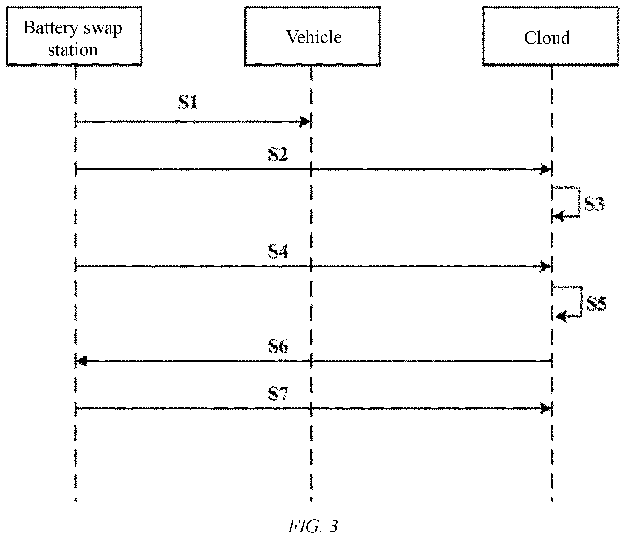

FIG. 3 is a schematic flowchart of a method for managing a vehicle to be battery swapped according to one or more embodiments of the disclosure.

As shown in FIG. 3, in step S 1, when it is detected that a current service vehicle is on a battery swap platform after a battery swapping operation for the current service vehicle on the battery swap platform is finished for a first time period t1, the battery swap station may send a first message to the current service vehicle, where the first message is used to instruct the current service vehicle to leave the battery swap platform. Exemplarily, a communication link may be established between the battery swap station and the current service vehicle in manners such as WiFi, Bluetooth, LAN, or 3G/4G/5G, so as to instruct, by using a central control screen of the vehicle, a phone, or an SMS message, the current service vehicle to leave the battery swap platform in time. In an embodiment, one or more image collection devices arranged on the battery swap station side may be used to collect an image of the battery swap platform, an image detection algorithm may be used to process the collected image of the battery swap platform, and whether the current service vehicle is on the battery swap platform is determined based on a processing result of the image detection algorithm.

In step S2, when it is detected that the current service vehicle is on the battery swap platform after the battery swapping operation for the current service vehicle on the battery swap platform is finished for the first time period t1, the battery swap station may send a second message to a cloud, where the second message is used to notify the cloud that the current service vehicle is on the battery swap platform and instruct the cloud to create a vehicle identifier associated with the current service vehicle and a count value corresponding to the vehicle identifier. Optionally, steps S 1 and S2 may be performed simultaneously.

In step S3, the cloud creates, based on the second message, the vehicle identifier associated with the current service vehicle and the count value corresponding to the vehicle identifier.

In step S4, after the execution of steps S 1 and/or S2 is finished for a second time period t2, when it is detected again that the current service vehicle is on the battery swap platform, the battery swap station may send a third message to the cloud, where the third message is used to increment the count value corresponding to the vehicle identifier. Optionally, in step S4, whether the current service vehicle is on the battery swap platform may be detected by taking the second time period t2 as a detection period, and a third message is sent to the cloud in response to detecting that the current service vehicle is on the battery swap platform, where the third message is used to increment the count value corresponding to the vehicle identifier.

In step S5, in response to the third message received from the battery swap station, the cloud increments the count value corresponding to the vehicle identifier of the current service vehicle.

In step S6, when the incremented count value corresponding to the vehicle identifier of the current service vehicle reaches a preset threshold, the cloud sends, to the battery swap station, a signal indicating that the incremented count value corresponding to the vehicle identifier reaches the preset threshold, and the battery swap station triggers a remote O&M operation in response to receiving the signal. In an embodiment, the remote O&M operation may include notifying the remote service personnel to instruct the current service vehicle to leave the battery swap platform, and notifying the service personnel of the battery swap station to guide the current service vehicle to leave the battery swap platform when necessary.

In step S7, in the process of detecting whether the current service vehicle is on the battery swap platform by taking the second time period t2 as a detection period, a fourth message is sent to the cloud in response to detecting that the current service vehicle leaves the battery swap platform, where the fourth message is used to notify the cloud that the current service vehicle corresponding to the vehicle identifier leaves the battery swap platform and that the incremented count value corresponding to the vehicle identifier is cleared.

It may be understood that, FIG. 3 is only an exemplary illustration of a closed-loop management process of vehicle departure in the self-service battery swapping that is implemented through communication interconnection between a battery swap station, a vehicle to be battery swapped, and a cloud. Without departing from the spirit and scope of the disclosure, the order of steps S1 to S7 shown in FIG. 3 may be adjusted adaptively, for example, step S7 may be performed before or after step S6.

In addition, as described above, the disclosure may alternatively be implemented as a computer storage medium, which has stored therein a program for causing a computer to perform the method for managing a vehicle to be battery swapped according to an aspect of the disclosure.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

Software (such as program code and/or data) in the disclosure may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A method for managing a vehicle to be battery swapped, comprising the following steps:
after a battery swapping operation for a current service vehicle on a battery swap platform is finished for a first time period, detecting whether the current service vehicle is on the battery swap platform;
enabling a first management operation in response to detecting that the current service vehicle is on the battery swap platform;
after the first management operation is finished for a second time period, detecting whether the current service vehicle is on the battery swap platform; and in response to detecting that the current service vehicle is on the battery swap platform, enabling a second management operation corresponding to the first management operation,
wherein the first management operation comprises:
sending a first message to the current service vehicle, wherein the first message is used to instruct the current service vehicle to leave the battery swap platform; and
sending a second message to a cloud, wherein the second message is used to create a vehicle identifier associated with the current service vehicle and a count value corresponding to the vehicle identifier.

2. The method according to claim 1, wherein the detecting whether the current service vehicle is on the battery swap platform comprises:
using an image collection device to collect an image of the battery swap platform;
using an image detection algorithm to process the collected image of the battery swap platform; and
determining, based on a processing result of the image detection algorithm, whether the current service vehicle is on the battery swap platform.

3. The method according to claim 1 or 2, wherein the second management operation corresponding to the first management operation comprises:
detecting, by taking the second time period as a detection period, whether the current service vehicle is on the battery swap platform;
sending a third message to the cloud in response to detecting that the current service vehicle is on the battery swap platform, wherein the third message is used to increment the count value corresponding to the vehicle identifier; and
triggering a remote O&M operation in response to receiving, from the cloud, a signal indicating that the incremented count value corresponding to the vehicle identifier reaches a preset threshold.

4. The method according to claim 3, further comprising:
detecting, by taking the second time period as a detection period, whether the current service vehicle is on the battery swap platform; and
sending a fourth message to the cloud in response to detecting that the current service vehicle leaves the battery swap platform, wherein the fourth message is used to notify the cloud that the current service vehicle corresponding to the vehicle identifier leaves the battery swap platform and that the incremented count value corresponding to the vehicle identifier is cleared.

5. The method according to any one of claims 1 to 4, further comprising:
after the battery swapping operation for the current service vehicle on the battery swap platform is finished for the first time period, detecting whether the current service vehicle is on the battery swap platform; and
in response to detecting that the current service vehicle leaves the battery swap platform, instructing a vehicle to be serviced to enter the battery swap platform.

6. The method according to any one of claims 1 to 5, further comprising:
after the first management operation is finished for a second time period, detecting whether the current service vehicle is on the battery swap platform; and
in response to detecting that the current service vehicle leaves the battery swap platform, instructing a vehicle to be serviced to enter the battery swap platform.

7. A computer system for managing a vehicle to be battery swapped, the system preferably being adapted to perform the method according to any one of claims 1 to 6, the system comprising:
a memory;
a processor; and
a computer program stored on the memory and executable on the processor, wherein the execution of the computer program causes the following steps to be performed:
after a battery swapping operation for a current service vehicle on a battery swap platform is finished for a first time period, detecting whether the current service vehicle is on the battery swap platform;
enabling a first management operation in response to detecting that the current service vehicle is on the battery swap platform;
after the first management operation is finished for a second time period, detecting whether the current service vehicle is on the battery swap platform; and
in response to detecting that the current service vehicle is on the battery swap platform, enabling a second management operation corresponding to the first management operation,
wherein the first management operation comprises:
sending a first message to the current service vehicle, wherein the first message is used to instruct the current service vehicle to leave the battery swap platform; and
sending a second message to a cloud, wherein the second message is used to create a vehicle identifier associated with the current service vehicle and a count value corresponding to the vehicle identifier.

8. The system according to claim 7, wherein the detecting whether the current service vehicle is on the battery swap platform comprises:
using an image collection device to collect an image of the battery swap platform;
using an image detection algorithm to process the collected image of the battery swap platform; and
determining, based on a processing result of the image detection algorithm, whether the current service vehicle is on the battery swap platform.

9. The system according to claim 7 or 8, wherein the second management operation corresponding to the first management operation comprises:
detecting, by taking the second time period as a detection period, whether the current service vehicle is on the battery swap platform;
sending a third message to the cloud in response to detecting that the current service vehicle is on the battery swap platform, wherein the third message is used to increment the count value corresponding to the vehicle identifier; and
triggering a remote O&M operation in response to receiving, from the cloud, a signal indicating that the incremented count value corresponding to the vehicle identifier reaches a preset threshold.

10. The system according to claim 9, wherein the execution of the computer program further causes the following steps to be performed:
detecting, by taking the second time period as a detection period, whether the current service vehicle is on the battery swap platform; and
sending a fourth message to the cloud in response to detecting that the current service vehicle leaves the battery swap platform, wherein the fourth message is used to notify the cloud that the current service vehicle corresponding to the vehicle identifier leaves the battery swap platform and that the incremented count value corresponding to the vehicle identifier is cleared.

11. The system according to any one of claims 7 to 10, wherein the execution of the computer program further causes the following steps to be performed:
after the battery swapping operation for the current service vehicle on the battery swap platform is finished for the first time period, detecting whether the current service vehicle is on the battery swap platform; and
in response to detecting that the current service vehicle leaves the battery swap platform, instructing a vehicle to be serviced to enter the battery swap platform.

12. The system according to any one of claims 7 to 11, wherein the execution of the computer program further causes the following steps to be performed:
after the first management operation is finished for a second time period, detecting whether the current service vehicle is on the battery swap platform; and
in response to detecting that the current service vehicle leaves the battery swap platform, instructing a vehicle to be serviced to enter the battery swap platform.

13. A computer storage medium, comprising instructions, wherein when the instructions are run, the method according to any one of claims 1 to 6 is performed.

14. A battery swap station, comprising the computer system for managing a vehicle to be battery swapped according to any one of claims 7 to 12.
